# EUROPEAN PATENT SPECIFICATION

(11) **EP 2 842 910 B1**
(45) Date of publication and mention of the grant of the patent: **03.08.2016**
(21) Application number: 14180967.3
(22) Date of filing: 14.08.2014
(51) Int. Cl.: D21H 27/30, C01B 31/04, B82Y 30/00, B82Y 40/00

(54) **METHOD OF PREPARING GRAPHENE PAPER**
VERFAHREN ZUR HERSTELLUNG VON GRAPHENPAPIER
PROCÉDÉ DE PRÉPARATION DE PAPIER GRAPHÈNE

(30) Priority: 28.08.2013 PL 40515413
(43) Date of publication of application: 04.03.2015
(73) Proprietor: Instytut Technologii Materialów Elektronicznych, 01-919 Warszawa (PL)
(72) Inventor: Kozinski, Rafal, 00-719 Warszawa (PL); Wilinski, Zbigniew, 01-405 Warszawa (PL); Librant, Krzysztof, 01-908 Warszawa (PL); Aksienionek, Magdalena, 03-149 Warszawa (PL); Lipinska, Ludwika, 04-346 Warszawa (PL)
(74) Representative: Sielewiesiuk, Jakub

(56) References cited:
- DE-A1-102011 109 457
- JP-A- 2012 240 853
- US-A1- 2011 101 554
- US-A1- 2013 065 034
- US-A1- 2013 065 060
- YUPENG ZHANG ET AL: "High quality graphene sheets from graphene oxide by hot-pressing", CARBON, vol. 54, 1 April 2013 (2013-04-01), pages 143-148, XP055121977, ISSN: 0008-6223, DOI: 10.1016/j.carbon.2012.11.012
- Ursula Rautenberg ET AL: "Grundlagen der Medienkommunikation" In: "Grundlagen der Medienkommunikation", 1 January 2001 (2001-01-01), Max Niemeyer Verlag GmbH, Tübingen, XP055164496, page 36, * page 36 - page 36 *
- Ludwika Lipinska ET AL: "Grafen platkowy", Chemia Przemyslowa, 1 May 2012 (2012-05-01), pages 16-19, XP055164289, Poland Retrieved from the Internet: URL:http://www.kierunekchemia.pl/artykul,5 463,grafen-platkowy.html [retrieved on 2015-01-22]

## Description

The object of the invention is a method of preparing graphene paper, especially with a high surface area. More particularly, the invention relates to a method of preparing flexible, multilayer structures which are not connected with the substrate, and made of graphene flakes or of composites thereof with other forms of carbon: carbon nanotubes, carbon fibers or other carbon allotropes. Graphene can be used in an oxidised form (graphene oxide), reduced graphene oxide, functionalised graphene, and decorated with metal particles or their oxides.

Graphene paper can be characterised by excellent mechanical properties, as presented by A. Ranjbarttoreh in his article. Paper made of reduced graphene oxide may be 6 times lighter and twice as hard as steel, have 10 times higher tensile strength and 13 times higher bending stiffness [1]. In addition to the exceptional mechanical properties, graphene paper can be characterised by excellent thermal and electrical conductivity. Due to the said advantages, it has a lot of potential applications. Its mechanical properties and the fact that it is much lighter than steel make it very attractive for automotive and aerospace industries, by creating opportunities to reduce the weight of vehicles and airplanes. This will allow consumption of smaller amounts of fuel and reduction of pollutants emitted into the atmosphere. Graphene paper, due to its flexibility and good electrical conductivity, while having a small thickness, may be an excellent material for electrodes in supercapacitors and flexible lithium-ion batteries.

Thickness of graphene paper usually varies in the range of several to several hundred micrometers. The thinnest papers of graphene oxide are translucent, their colour can vary from pale brown through black to silver or graphite, depending on their composition. The paper surface can be smooth or have a three-dimensional pattern resulting from the use of a suitable substrate.

Graphene paper was first obtained by a group of researchers from Northwestern University (USA) in 2007 from the suspension of graphene oxide GO [2]. Paper from the suspension of reduced graphene oxide was also obtained [3]. Addition of a few percent of carbon nanotubes to the suspension of reduced oxide significantly increased the electrochemical properties of the later obtained graphene paper [4].

So far, attempts were made to prepare graphene paper by two methods: filtration, especially the vacuum filtration [1-16] and the technique of pouring into casting moulds and evaporating the solvent [17-21]. Both of these methods have limitations, primarily as regards the size of the papers produced, limited to the size of membranes used in the vacuum filtration technique (diameter generally of a few centimetres) or of casting moulds. What is more, freely drying paper has a tendency to wrinkle, peel and crumble.

Numbers enclosed in square brackets above refer to the following publications of the prior art:
[1] A. R. Ranjbarttoreh et al, Advanced mechanical properties of graphene paper, Journal of Applied Physics, 109 (2011), 014306-1
[2] D. A. Dikin et al, "Preparation and characterization of graphene oxide paper" Nature, 448 (2007) 457.
[3] H. Chen et al, "Mechanically strong, electrically conductive, and biocompatibile graphene paper", Advanced Materials, 20 (2008) 3557.
[4] Z. D. Huang et al, "Effects of reduction process and carbon nanotube content on the superactive performance of flexible graphene oxide papers", Carbon, 50 (2012) 4239.
[5] S. Park et al., "The effect of concentration of graphene nanoplatelets on mechanical and electrical properties of reduced graphene oxide papers", Carbon, 50 92012) 4573.
[6] O. C. Compton et al; "Tuning the mechanical properties of graphene oxide paper and its associated polymer nanocomposites by controlling cooperative intersheet hydrogen bonding", ASC NANO, 6 (2012) 2008.
[7] C. Valles et al, "Flexible conductive graphene paper obtained by direct and gentle annealing of graphene oxide paper", Carbon, 50 (2012) 835.
[8] X. Huang et al, "Temperature-dependent electrical property transition of graphene oxide paper", Nanotechnology, 23 (2012) 455705.
[9] O. C. Compton et al," Electrically conductive alkylated graphene paper via chemical reduction of amine-functionalized graphene oxide paper", Advanced Materials, 22 (2012) 892.
[10] D. Sun, X. Yan, J. Lang, Q. Xue, "High performance supercapacitor electrode based on graphene paper via flame-induced reduction of graphene oxide paper", Journal of Power Sources, 222 (2013) 52.
[11] A. Satti, P. Larpent, Y Gun'ko, "Improvement of mechanical properties of graphene oxide/poly(allylamine) composites by chemical crosslinking", Carbon, 48 (2010) 3376.
[12] Y. Hu et al, "Influence of paper thickness on the electrochemical performances of graphene papers as anode for lithium ion batteries", Electrochimica Acta, 91 (2013) 227.
[13] H. Wu, L.T. Drzal, "Graphene nanoplatelet paper as light-weight composite with excellent electrical and Thermal conductivity and good gas barrier properties", Carbon, 50 (2012) 1135.
[14] Y.H. Hu et al, "Free-standing graphene-carbon nanotube hybrid papers used as collector and binder free anodes for lithium ion batteries", Journal of Power Sources, 237 (2013) 41.
[15] Y Dai et al, "Fabrication of self-binding noble metal/flexible graphene composite paper", Carbon, 50 (2012) 4648.
[16] Y. Liu et al, "Mechanical properties of graphene papers", Journal of Mechanics and Physics of Physics of Solids, 60 (2012) 591.
[17] I. K. Moon, J. Lee, R.S. Ruoff, H. Lee, "Reduced grapheme oxide by chemical graphitization", Nature Communications, DOI: 10.1038/ ncomms1067.
[18] Y Su et al, "Exceptional negative thermal expansion and viscoelastic properties of graphene oxide paper", Carbon, 50 (2012) 2804.
[19] F. Xiao et al, "growth of metal-metal oxide nanostructures on freestanding graphene paper for flexible biosensors", Advanced Functional Materials, 22 (2012) 2487.
[20] X. Zan et al, "Freestanding grapheme paper decorated with 2D-assembly of Ai@Pt nanoparticles as flexible biosensors to monitor live cell secretion of nitric oxide", Biosensors and Bioelectronics, 49 (2013) 71.
[21] R. Gao et al, "Paper-like graphene-Ag composite films with enhanced mechanical and electrical properties", Nanoscale Research Letters, 8 (2013) 32.

Y. Zhang et al, "High quality graphene sheets from graphene oxide by hot-pressing", CARBON, 54, (2013) 143.

L. Lipinska et al, "Grafen platkowy", Chemia Przemyslowa, (2012) 16.

U. Rautenberg et al., "Grundlagen der Medienkommunikation" (2001), Max Niemeyer Verlag GmbH, Tubingen, ISBN 14340461.

The patent applications DE 10 2011 109457 A1, US 2011/101554 A1, JP 2012 240853 A, US 2013/065060 A1 disclose methods for making graphene paper.

Therefore, the object of the present invention is to propose a method of preparing graphene paper devoid of the above disadvantages.

The method of preparing graphene paper, especially with a high surface area, according to the invention, is characterised in that it comprises the following steps:
a. graphene suspension is distributed between substrates, wherein at least one substrate having open pores,
b. the graphene suspension being spread between two substrates is compressed,
c. the graphene suspension being spread and compressed between two substrates is dried.

Preferably, in step a) the graphene suspension is deposited on the first substrate, which is solid or has open pores, and is covered by the second substrate, which is solid or with open pores.

Preferably, in step a) the graphene suspension is dispensed by using of a mechanical device providing a homogeneous thickness of the suspension layer, preferably equipped with a nozzle with a longitudinal slit.

Preferably, in step a) the graphene suspension is spread by passing the graphene suspension, disposed between two substrates, between two counter rotating cylinders.

Preferably, in step b) the compression is performed so that the graphene suspension is evenly distributed between two substrates.

Preferably, in step b) the graphene suspension is compressed by passing the graphene suspension disposed between two substrates, between two cylinders counter rotating respect to each other.

Preferably, in step b) the graphene suspension is compressed by passing the graphene suspension, disposed between two substrates, through a head in the shape of a longitudinal hopper. Similarly to the variant with two counter rotating cylinders. This solution gives the possibility to compress in continuous production.

Preferably, in step b) the graphene suspension is compressed with a pressure in the range of 1 Pa to 50Pa per square centimetre of the forming paper, preferably of 10Pa to 15Pa per square centimetre of the forming paper. Preferably, a small, evenly distributed pressure should be used so that the suspension is homogeneously distributed and it is not forced through pores of the substrate.

Preferably, in step c) the arrangement is allowed to dry freely or is actively dried, preferably at a temperature of 20°C to 120°C.

Preferably, the graphene suspension being used contains a substance selected from the group consisting of: graphene oxide, reduced graphene oxide and their derivatives, especially graphene oxide or reduced graphene oxide which is functionalised, decorated with metal particles, decorated with metal oxides, possibly also containing single-walled or multi-walled carbon nanotubes, ceramic nanopowder or metal nanopowders or metal oxide nanopowders, is used as the graphene suspension.

Preferably, one of the used substrates is solid or has open pores, and the other one of the used substrates has open pores.

Preferably, a substrate having open pores with a diameter of 0.01 µm to 30µm, preferably of 0.22 µm to 20 µm, is used.

Preferably, two substrates having hydrophobic nature, one of them being more hydrophobic than the other, are used.

Preferably, the method according to the invention further comprises the step of:
d. reduction of the resulting graphene paper, especially chemical or thermal reduction, if the graphene suspension being used contains graphene oxide, particularly in order to modify the electrical conductivity.

In particular, if the paper prepared is based on graphene oxide, then it can be subjected to chemical, thermal or other reduction in order to restore the electrical conductivity.

Most generally, the method of preparing graphene paper according to the present invention consists in that the graphene suspension, especially suspension containing graphene oxide or reduced graphene oxide or its derivatives (functionalised, decorated with metal particles or their oxides), possibly mixed with other materials (nanotubes, ceramics, nanopowders of a specific composition and concentration) is spread and dried between two materials, hereinafter referred to as substrates. The suspension is deposited to the substrate, which is solid or has open pores, e.g. polymer film or filter mesh (substrate referred to as substrate A). Then, a layer of the substrate is covered with a perforated film or a mesh with such a opening size to allow effective evaporation of the solvent, simultaneously preventing the leakage of the material through the mesh (substrate referred to as substrate B). Further, the system is compressed so that the suspension of the graphene material is homogeneously spread between substrates A and B. Finally, the system is allowed to dry or is actively dried. Dry graphene paper easily separates from substrates A and B.

If the paper prepared is based on graphene oxide, then it can be subjected to chemical, thermal or other reduction in order to restore the electrical conductivity.

The method according to the present invention can be transferred from a laboratory scale to an industrial scale. In the production process, devices currently used in the paper industry can be used.

### Preferred Embodiments of the Invention

Now, the invention will be presented in greater detail in preferred embodiments, with reference to the accompanying drawings in which:
- Fig. 1: schematically illustrates a method of preparing graphene paper according to Examples I and II,
- Fig. 2: schematically illustrates a method of preparing graphene paper according to Example III,
- Fig. 3: schematically illustrates a method of preparing graphene paper according to Example IV,
- Fig. 4: schematically illustrates a method of preparing graphene paper according to Example V,
- Fig. 5: shows a cross-sectional SEM image of graphene paper obtained by the method according to the invention, and
- Fig. 6: shows the Raman spectrum which is characteristic for reduced graphene paper, and obtained for graphene paper prepared by the method according to the invention.

In the drawings, the following designations were used: 1 - substrate A, 2 - substrate B, 3 - graphene suspension, 4 - graphene paper, 5 - operating cylinders, 6 - pressing (pressure), 7 - head in the shape of a longitudinal hopper.

### Examples I-III do not form part of the invention.

### Example I

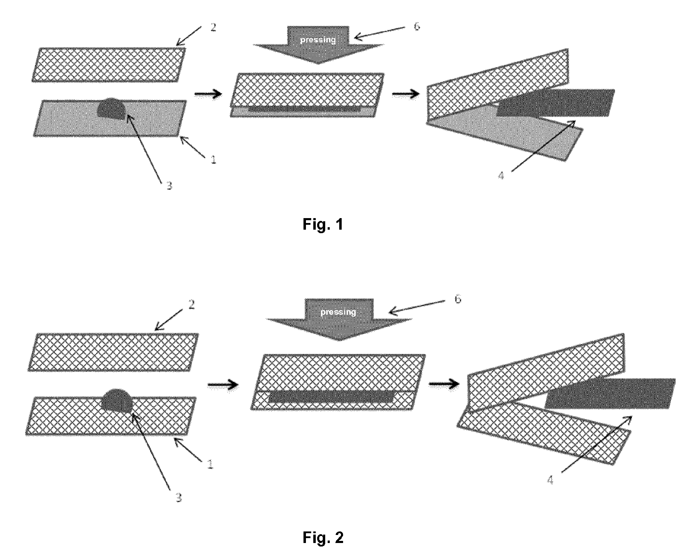

To a polymer film 1 of hydrophobic surface and with a surface area of 300cm² (substrate A), 6ml of aqueous suspension 3 of graphene oxide with a concentration of 25g/L was deposited. On the suspension 3, a stretched and tensioned plastic mesh 2 with a opening size of 15µm and with a surface area of 300cm² (substrate B) was deposited. By means of a piston with a surface area of 150cm², the suspension between substrates 1, 2 was pressed 6 with a pressure of 1300 Pa. The piston was raised and the suspension 3 was allowed to evaporate. After drying, the formed paper 4 of graphene oxide was separated from the film 1 and the mesh 2. The preparation method is illustrated in Fig. 1.

### Example II

On a glass pane 1 covered with grease with dimensions of 50x25x1cm (substrate A), 15ml of aqueous suspension 3 of graphene oxide with a concentration of 30g/L was deposited. On the suspension 3, a stretched and tensioned plastic mesh 2 with a opening size of 15µm and with a surface area of 60x30cm² (substrate B) was deposited. By means of a glass plate, the suspension-3 was pressed 6 between the pane 1 and the mesh 2 with a pressure of 10 000 Pa. The glass pane was raised and the system was dried at 60°C for 6h. After drying, the formed paper 4 of graphene oxide was separated from the glass pane 1 and the mesh 2. The preparation method is illustrated in Fig. 1.

### Example III

On a stretched and tensioned hydrophobic plastic mesh 1 with a surface area of 1m² (substrate A), 60ml of aqueous suspension 3 of graphene oxide with a concentration of 40g/L was deposited. The suspension 3 was homogeneously spread with a squeegee, then to the suspension 3, another stretched and tensioned plastic mesh 2 with a opening size of 15µm and with a surface area of 1m² (substrate B) was deposited. The suspension 3 was pressed 6 between the meshes 1, 2 by means of a uniaxial press with a pressure of 60 000 Pa, and the water was evaporated in a stream of dry air. After drying, the formed paper 4 of graphene oxide was separated from the meshes 1, 2. The preparation method is illustrated in Fig. 2.

### Example IV

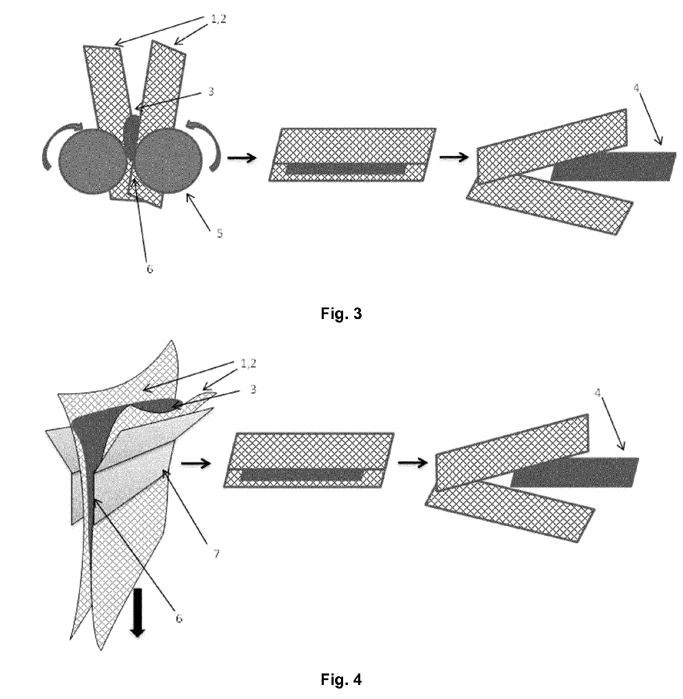

Graphene paper 4 was prepared in a continuous process, with the use of two meshes 1, 2 with different hydrophobicities (substrate A and substrate B, respectively) and by using pressing 6 between counter rotating cylinders 5. Into the slot between the counter rotating cylinders 5, with a width of about 100µm, two polymer meshes 1, 2 with a opening size of 15µm and a width of 20 cm were introduced. Then, the graphene suspension 3 was dosed in between the meshes 1, 2. After pressing 6 between the cylinders 5, the suspension 3 homogeneously spread between the meshes 1, 2 was obtained. Then, the suspension 3 was evaporated and the paper 4 was separated from the meshes 1, 2. The paper 4 had a width of 15cm and a thickness of 5µm. The preparation method is illustrated in Fig. 3.

### Example V

Graphene paper 4 was prepared in a continuous process by using two meshes 1, 2 (substrate A and substrate B, respectively) and by means of a head in the shape of a longitudinal hopper. Into the slot of the head, with a width of about 50µm, two polymer meshes 1, 2 with a opening size of 20µm and a width of 100cm were introduced. Then, the graphene suspension 3 was dosed in between the meshes 1, 2. After compression 6 in the slot of the head 7, the suspension 3 homogeneously spread between the meshes 1, 2 was obtained. Then, the suspension 3 was evaporated and the paper 4 was separated from the meshes 1,2. The paper 4 had a width of 80cm and a thickness of 3µm. The preparation method is illustrated in Fig. 4.

According to the following literature data [22, 23], electrical conductivity of graphene paper is 190 S/m to 5.71×10⁵ S/m. Wherein such a high conductivity value of graphene paper was obtained through a combination of chemical reduction (with hydrazine) and of lengthy annealing at high temperatures (up to 2,700°C).
[22] Nano Res DOI: 10.1007/s12274-013-0298-6 R. Rozada, et al. "Towards full repair of defects in reduced graphene oxide films by two-step graphitization".
[23] C. Valles,et al., Carbon 50 (2012), 835-844, "Flexible conductive graphene paper obtained by direct and gentle annealing of graphene oxide paper".

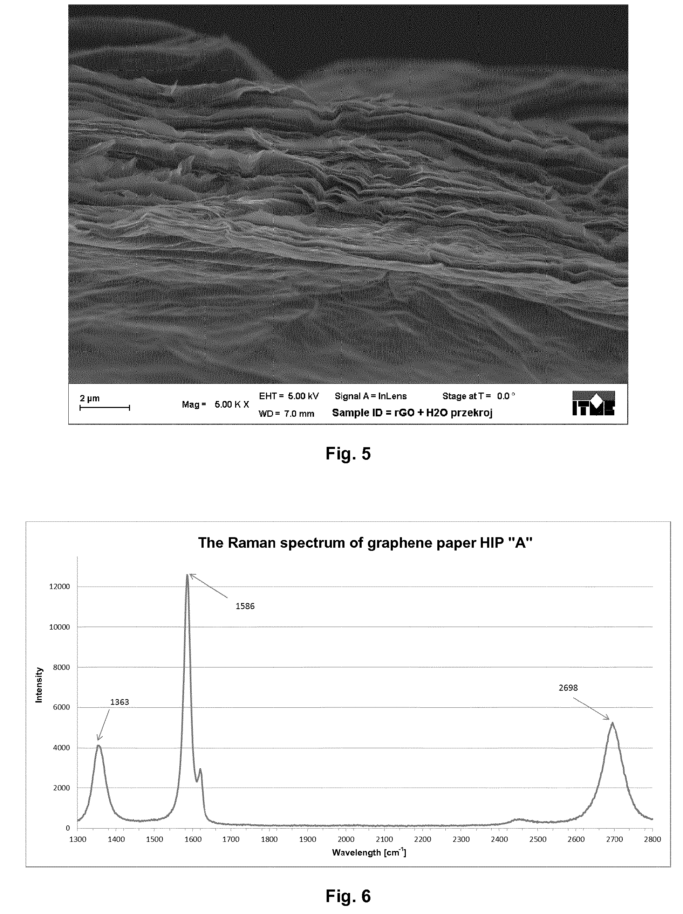

Graphene paper prepared by the method according to Example I of the present invention was characterised. The cross-sectional structure is shown in the picture from a SEM microscope (scanning electron microscope, Fig. 5). The Raman spectrum is shown in Fig. 6.

Further, the paper of graphene oxide obtained by the method according to the present invention can be subjected to reduction, by a method described in Polish patent application No. P-403168, not yet published. After such a reduction, this paper has one of the highest conductivities compared to the values cited in the literature. This demonstrates the very high-quality of the paper of reduced graphene oxide, obtained by the method according to the present invention. This conductivity is 2.26×10⁵ S/m.

## Claims

1. A method of preparing graphene paper, especially with a high surface area, **characterised in that** it comprises the following steps:
a. graphene suspension (3) is spread between substrates (1, 2), wherein at least one substrate (1, 2) having open pores,
b. the graphene suspension (3) being spread between two substrates (1, 2) is compressed,
c. the graphene suspension (3) being spread and compressed between two substrates (1, 2) is dried.

2. The method according to claim 1, **characterised in that,** in step a) the graphene suspension (3) is deposited on the first substrate (1), which is solid or has open pores, and is covered by the second substrate (2), which is solid or with open pores.

3. The method according to claim 1 or 2, **characterised in that,** in step a) the graphene suspension (3) is dispensed by using a mechanical device providing a homogeneous thickness of the suspension layer, preferably equipped with a nozzle with a longitudinal slot.

4. The method according to claim 1, 2 or 3, **characterised in that,** in step a) the graphene suspension (3) is spread by passing the graphene suspension (3), disposed between two substrates (1, 2), between two counter rotating cylinders (5).

5. The method according to claim 1, 2, 3 or 4, **characterised in that,** in step b) the compression is performed so that the graphene suspension (3) is evenly spread between two substrates (1, 2).

6. The method according to any one of the preceding claims 1 to 5, **characterised in that,** in step b) the graphene suspension (3) is compressed by passing the graphene suspension (3) disposed between two substrates (1, 2), between two cylinders (5) counter rotating respect to each other.

7. The method according to any one of the preceding claims 1 to 6, **characterised in that,** in step b) the graphene suspension (3) is compressed by passing the graphene suspension (3) disposed between two substrates (1, 2), through a head in the shape of a longitudinal hopper (7).

8. The method according to any one of the preceding claims 1 to 7, **characterised in that,** in step b) the graphene suspension (3) is compressed with a pressure in the range of 1 Pa to 50Pa per square centimetre of the formed paper, preferably of 10Pa to 15Pa per square centimetre of the formed paper.

9. The method according to any one of the preceding claims 1 to 8, **characterised in that,** in step c) the system (1, 2, 3) is allowed to dry freely or is actively dried, preferably at a temperature of 20°C to 120°C.

10. The method according to any one of the preceding claims 1 to 9, **characterised in that** the graphene suspension (3) being used contains a substance selected from the group consisting of: graphene oxide, reduced graphene oxide and their derivatives, especially graphene oxide or reduced graphene oxide which is functionalised, decorated with metal particles, decorated with metal oxides, optionally also containing single-walled or multi-walled carbon nanotubes, ceramic nanopowder or metal nanopowders or metal oxide nanopowders.

11. The method according to any one of the preceding claims 1 to 10, **characterised in that,** one of the used substrates (1) is solid or has open pores, and the other one of the used substrates (2) has open pores.

12. The method according to any one of the preceding claims 1 to 11, **characterised in that,** a substrate (1, 2) having open pores with a diameter of 0.01µm to 30µm, preferably of 0.22µm to 20µm, is used.

13. The method according to any one of the preceding claims 1 to 12, **characterised in that,** two substrates (1, 2) having hydrophobic nature, one of them being more hydrophobic than the other, are used.

14. The method according to any one of the preceding claims 1 to 13, **characterised in that** if the graphene suspension (3) being used contains graphene oxide, the method further comprises the step of:
d. reduction of the formed graphene paper (4), especially chemical or thermal reduction, particularly in order to modify the electrical conductivity.

## Patentansprüche

1. Verfahren zur Herstellung von Graphenspapier, insbesondere mit einem großen Oberflächenbereich, **dadurch gekennzeichnet, dass** es die folgenden Schritte umfasst:
a. Graphenssuspension (3) verteilt sich zwischen den Substraten (1,2), wobei mindestens ein Substrat (1, 2) offene Poren hat,
b. Graphenssuspension (3) zwischen zwei Substraten verteilt (1, 2) zusammengedrückt wird,
c. Graphenssuspension (3) zwischen zwei Substraten (1, 2) verteilt und zusammengedrückt, getrocknet wird.

2. Verfahren nach Anspruch 1, **dadurch gekennzeichnet, dass** in Schritt a) eine Graphenssuspension (3) auf dem ersten Substrat (1), der fest ist oder offene Poren hat, hingelegt wird, und durch das zweite Substrat (2), die fest ist oder die offenen Poren hat, bedeckt wird.

3. Verfahren nach Anspruch 1 oder 2, **dadurch gekennzeichnet, dass,** in Schritt a) eine Graphenssuspension (3) wird unter Einsatz von einer mechanischen Vorrichtung, die eine homogene Dicke der Suspensionsschicht bereitstellt, vorzugsweise mit einer Düse mit einem Längsschlitz ausgestattet ist, gespendet.

4. Verfahren nach Anspruch 1, 2 oder 3, **dadurch gekennzeichnet, dass,** in Schritt a) die Graphenssuspension (3) wird durch Hindurchleiten der Graphenssuspension (3) zwischen den zwei Substraten (1, 2) angeordneten, zwischen zwei gegensinnig rotierenden Zylinder (5) verteilt.

5. Verfahren nach Anspruch 1, 2, 3 oder 4, **dadurch gekennzeichnet, dass,** in Schritt b) die Pressung so durchgeführt wird, dass die Graphenssuspension (3) zwischen zwei Substraten gleichmäßig verteilt wird (1, 2).

6. Verfahren nach einem der vorhergehenden Ansprüche 1 bis 5, **dadurch gekennzeichnet, dass,** in Schritt b) die Graphenssuspension (3) wird durch Hindurchleiten der Graphenssuspension (3) zwischen den zwei Substraten (1, 2) angeordneten, zwischen zwei gegensinnig rotierenden Zylinder (5) in Bezug zueinander zusammengedrückt wird.

7. Verfahren nach einem der vorhergehenden Ansprüche 1 bis 6, **dadurch gekennzeichnet, dass,** in Schritt b) die Graphenssuspension (3) durch Hindurchleiten der Graphenssuspension (3) zwischen den zwei Substraten (1, 2) angeordneten, durch einen Kopf in der Form eines longitudinalen Einfülltrichter zusammengedrückt wird.

8. Verfahren nach einem der vorhergehenden Ansprüche 1 bis 7, **dadurch gekennzeichnet, dass** in Schritt b) die Graphenssuspension (3) mit einem Druck im Bereich von 1 Pa bis 50 Pa pro Quadratzentimeter des gebildeten Papiers, vorzugsweise von 10 Pa bis 15 Pa pro Quadratzentimeter des gebildeten Papiers komprimiert wird.

9. Verfahren nach einem der vorhergehenden Ansprüche 1 bis 8, **dadurch gekennzeichnet, dass** in Schritt c) das System (1, 2, 3) frei zu trocken erlaubt wird oder aktiv getrocknet wird, vorzugsweise bei einer Temperatur von 20°C zu 120°C.

10. Verfahren nach einem der vorhergehenden Ansprüche 1 bis 9, **dadurch gekennzeichnet, dass** die verwendete Graphenssuspension (3) eine Substanz ausgewählt aus der Gruppe bestehende aus: Graphenoxid, reduziertem Graphenoxid und deren Derivate, insbesondere Graphenoxid oder reduziertem Graphenoxid, das funktionalisiert ist, mit Metallpartikeln verziert, mit Metalloxiden verziert, gegebenenfalls auch einwandigen oder mehrwandigen Kohlenstoff-Nanoröhrchen, Keramik-Nanopulver oder Metallnanopulver oder Metalloxid-Nanopulver enthält.

11. Verfahren nach einem der vorhergehenden Ansprüche 1 bis **10,dadurch gekennzeichnet, dass** ein der verwendeten Substrate (1) fest ist oder offene Poren hat, und das andere der verwendeten Substrate (2) offene Poren hat.

12. Verfahren nach einem der vorhergehenden Ansprüche 1 bis 11 **dadurch gekennzeichnet, dass** ein Substrat (1, 2) mit offenen Poren mit einem Durchmesser von 0.01µm bis 30µm, vorzugsweise von 0.22µm bis 20µm, verwendet wird.

13. Verfahren nach einem der vorhergehenden Ansprüche 1 bis 12, **dadurch gekennzeichnet, dass** zwei Substrate (1, 2) hydrophobe Natur aufweisende, von denen einer als die andere hydrophober ist, verwendet werden.

14. Verfahren nach einem der vorhergehenden Ansprüche 1 bis 13, **dadurch gekennzeichnet, dass** wenn die verwendete Graphenssuspension (3) Graphenoxid enthält, umfasst das Verfahren ferner den folgenden Schritt:
d. Reduktion des gebildeten Graphenspapier (4), insbesondere chemische oder thermische Reduktion, insbesondere, um die elektrische Leitfähigkeit zu ändern.

## Revendications

1. Une méthode de préparation du papier de graphène, en particulier avec une aire superficielle élevée, **caractérisée en ce qu**'elle comprend les étapes suivantes :
a. suspension de graphène (3) est répartie entre des substrats (1, 2), où au moins un substrat (1, 2) présente des pores ouverts,
b. la suspension de graphène (3) étant répartie entre deux substrats (1, 2) est comprimée,
c. la suspension de graphène (3) étant répartie et comprimée entre deux substrats (1, 2) est séchée.

2. La méthode selon la revendication 1, **caractérisée en ce que,** à l'étape a), la suspension de graphène (3) est déposée sur le premier substrat (1), qui est solide ou présente des pores ouverts, et est couverte par le deuxième substrat (2) qui est solide ou avec des pores ouverts.

3. La méthode selon la revendication 1 ou 2, **caractérisée en ce que,** à l'étape a), la suspension de graphène (3) est distribuée à l'aide d'un dispositif mécanique fournissant une épaisseur homogène de la couche de suspension, de préférence équipé d'une buse avec une fente longitudinale.

4. La méthode selon la revendication 1, 2 ou 3, **caractérisée en ce que,** à l'étape a), la suspension de graphène (3) est répartie en faisant passer la suspension de graphène (3), disposée entre deux substrats (1, 2), entre deux cylindres contrarotatifs (5).

5. La méthode selon la revendication 1, 2, 3 ou 4, **caractérisée en ce que,** à l'étape b), la compression est effectuée de telle sorte que la suspension de graphène (3) est uniformément répartie entre deux substrats (1, 2).

6. La méthode selon l'une quelconque des revendications précédentes 1 à 5, **caractérisée en ce que,** à l'étape b), la suspension de graphène (3) est comprimée en faisant passer la suspension de graphène (3), disposée entre deux substrats (1, 2), entre deux cylindres (5) tournant en sens inverse l'un par rapport à l'autre.

7. La méthode selon l'une quelconque des revendications précédentes 1 à 6, **caractérisée en ce que,** à l'étape b), la suspension de graphène (3) est comprimée en faisant passer la suspension de graphène (3), disposée entre deux substrats (1, 2), à travers une tête sous la forme d'une trémie longitudinale (7).

8. La méthode selon l'une quelconque des revendications précédentes 1 à 7, **caractérisée en ce que,** à l'étape b), la suspension de graphène (3) est comprimée sous une pression dans la plage de 1 Pa à 50Pa par centimètre carré du papier formé, de préférence de 10Pa à 15Pa par centimètre carré du papier formé.

9. La méthode selon l'une quelconque des revendications précédentes 1 à 8, **caractérisée en ce que,** à l'étape c), le système (1, 2, 3) est laissé à sécher librement ou est activement séché, de préférence à une température de 20 °C à 120 °C.

10. La méthode selon l'une quelconque des revendications précédentes 1 à 9, **caractérisée en ce que** la suspension de graphène (3), qui est utilisée, contient une substance choisie dans le groupe constitué par : oxyde de graphène, oxyde de graphène réduit et leurs dérivés, particulièrement oxyde de graphène ou oxyde de graphène réduit qui est fonctionnalisé, décoré avec des particules métalliques, décoré avec des oxydes métalliques, éventuellement contenant aussi nanotubes en carbone à paroi simple ou parois multiples, nanopoudre céramique ou nanopoudres métalliques, ou nanopoudres d'oxydes métalliques.

11. La méthode selon l'une quelconque des revendications précédentes 1 à 10, **caractérisée en ce que** l'un des substrats utilisés (1) est solide ou présente des pores ouverts, et l'autre des substrats utilisés (2) présente des pores ouverts.

12. La méthode selon l'une quelconque des revendications précédentes 1 à 11, **caractérisée en ce qu'**un substrat (1, 2) ayant des pores ouverts avec un diamètre de 0.01µm à 30µm, de préférence de 0.22µm à 20µm, est utilisé.

13. La méthode selon l'une quelconque des revendications précédentes 1 à 12, **caractérisée en ce que** deux substrats (1, 2) à caractère hydrophobe sont utilisés, l'un d'entre eux étant plus hydrophobe que l'autre.

14. La méthode selon l'une quelconque des revendications précédentes 1 à 13, **caractérisée en ce que** si la suspension de graphène (3), qui est utilisée, contient de l'oxyde de graphène, la méthode comprend en outre l'étape de :
d. réduction du papier de graphène formé (4), en particulier réduction chimique ou thermique, en particulier afin de modifier la conductivité électrique.
